# EUROPÄISCHE PATENTSCHRIFT

(11) **EP 2 877 902 B1**
(45) Veröffentlichungstag und Bekanntmachung des Hinweises auf die Patenterteilung: **27.05.2020**
(21) Anmeldenummer: 13732903.3
(22) Anmeldetag: 27.06.2013
(51) Int. Cl.: G05B 19/418, G05B 19/042, G05B 23/02

(54) **VERFAHREN ZUR AUFRECHTERHALTUNG DER FUNKTIONSFÄHIGKEIT EINES FELDGERÄTES**
METHOD FOR MAINTAINING THE FUNCTIONALITY OF A FIELD DEVICE
PROCÉDÉ POUR LE MAINTIEN EN ÉTAT DE L'APTITUDE AU FONCTIONNEMENT D'UN APPAREIL DE CHAMP

(30) Priorität: 25.07.2012 DE 102012106774
(43) Veröffentlichungstag der Anmeldung: 03.06.2015
(73) Patentinhaber: Endress+Hauser SE+Co. KG, 79689 Maulburg (DE)
(72) Erfinder: KILIAN, Markus, 79249 Merzhausen (DE); SEGER, Andrea, 79669 Zell (DE); VON STEIN, Bert, 79669 Zell i. W. (DE); WANDREI, Norbert, 70599 Stuttgart (DE)
(74) Vertreter: Andres, Angelika Maria
(86) Internationale Anmeldenummer: PCT/EP2013/063566
(87) Internationale Veröffentlichungsnummer: WO 2014/016076

(56) Entgegenhaltungen:
- EP-A2- 2 093 639
- DE-A1- 10 051 645
- DE-A1- 19 810 222
- DE-A1-102005 013 285
- DE-A1-102009 028 655

## Beschreibung

Die Erfindung bezieht sich auf ein Verfahren zur Aufrechterhaltung der Funktionsfähigkeit eines Feldgerätes der Automatisierungstechnik.

In der Prozessautomatisierungstechnik werden vielfach Feldgeräte eingesetzt, die zur Erfassung und/oder Beeinflussung von Prozessgrößen dienen. Zur Erfassung von Prozessgrößen dienen Sensoren, wie beispielsweise Füllstandsmessgeräte, Durchflussmessgeräte, Druck- und Temperaturmessgeräte, pH-Redoxpotentialmessgeräte, Leitfähigkeitsmessgeräte, etc., welche die entsprechenden Prozessvariablen Füllstand, Durchfluss, Druck, Temperatur, pH-Wert bzw. Leitfähigkeit erfassen. Zur Beeinflussung von Prozessgrößen dienen Aktoren, wie zum Beispiel Ventile oder Pumpen, über die der Durchfluss einer Flüssigkeit in einem Rohrleitungsabschnitt bzw. der Füllstand in einem Behälter geändert werden kann. Als Feldgeräte werden im Prinzip alle Geräte bezeichnet, die prozessnah eingesetzt werden und die prozessrelevante Informationen liefern oder verarbeiten. Neben den zuvor genannten Sensoren und Aktoren werden als Feldgeräte allgemein auch solche Einheiten bezeichnet, die direkt an einem Feldbus angeschlossen sind und zur Kommunikation mit den übergeordneten Einheiten dienen, wie z.B. Remote I/Os, Gateways, Linking Devices und Wireless Adapters. Eine Vielzahl solcher Feldgeräte wird von der Endress + Hauser-Gruppe hergestellt und vertrieben.

Vor der Inbetriebnahme und zum Verändern der Funktion des Feldgerätes müssen diese parametriert werden. Zur Parametrierung, insbesondere zum Lesen und/oder Schreiben von Parametern, werden Bedienwerkzeuge bzw. Bedientools eingesetzt. Derartige Bedienwerkzeuge sind dabei in der Regel auf einer separat von dem jeweiligen Feldgerät ausgebildeten Kommunikationseinheit implementiert und stehen über einen Feldbus oder über eine Service-Schnittstelle des Feldgerätes (über die gegebenenfalls auch mit einem herstellerspezifischen Protokoll kommuniziert wird) mit dem Feldgerät in Kommunikationsverbindung.

Damit zwischen einem mit dem Feldgerät in Kommunikationsverbindung stehenden Bedienwerkzeug und dem Feldgerät kein zyklischer Abgleich aller Daten, insbesondere von in dem Feldgerät vorgesehenen Parametern, erfolgen muss, wird zwischen statischen Parametern und dynamischen Parametern eines Feldgerätes unterschieden. Dynamische Parameter, wie beispielsweise Messwerte, Statusinformationen, Fehlermeldungen, etc., ändern ihren Wert insbesondere in Abhängigkeit von der zu messenden oder zu beeinflussenden Prozessvariablen und/oder in Abhängigkeit von dem Gerätezustand des Feldgerätes. Dynamische Parameter des Feldgerätes werden in der Regel im Rahmen einer zyklischen Kommunikation durch eine übergeordnete Einheit, welche die Prozesssteuerung durchführt, zyklisch gelesen bzw. bei einem Stellbefehl zyklisch geschrieben. Demgegenüber ändern sich statische Parameter nur, wenn sich an der Gerätekonfiguration des Feldgerätes etwas ändert. Eine solche Änderung der Gerätekonfiguration erfolgt in der Regel durch das Bedienen des Feldgerätes über ein Bedienwerkzeug oder über eine Vorortbedienung. Solch ein Bedienen wird in der Regel durch einen Nutzer oder durch ein übergeordnetes System durchgeführt. Ein zyklisches Auslesen von statischen Parametern ist hierbei nicht vorgesehen.

Diese Möglichkeit der Änderung der Gerätekonfiguration durch einen Nutzer bzw. Bediener oder durch ein übergeordnetes System birgt jedoch die Gefahr, dass das Gerät nicht richtig parametriert wurde und es im weiteren Betrieb zu Fehlfunktionen des Feldgerätes kommt. In diesem Fall bleibt oftmals nur noch das Rücksetzen aller statischen Parameter auf den Auslieferungszustand. Hierbei ist es besonders ärgerlich, dass viele nachträgliche Einstellungen, also Änderungen der Gerätekonfiguration mittels statischer Parameter, verloren gehen und darüber hinaus ein Serviceeinsatz nötig sein kann.
Zwar sind aus dem Stand der Technik Möglichkeiten bekannt, die vorsehen die durchgeführten Parameteränderungen auf unterschiedliche Weise zu sichern, jedoch muss in allen bekannten Verfahren der Nutzer bzw. Bediener selbst diese Sicherung durchführen. Oftmals liegt dann im Problemfall keine passende Sicherung vor, und es bleibt nur das Rücksetzten der Parameter auf den Auslieferungszustand. Dies führt dazu, dass das Feldgerät seinen Betrieb nicht fortsetzen kann oder erst nach längerer Pause, in der die entsprechenden Parameter wieder hergestellt werden müssen.
Die DE 10 2005 013 285 A1 betrifft ein Verfahren zum Konfigurieren eines Steuergerätes und das Steuergerät selbst. Das Steuergerät weist einen Arbeitsspeicher und einen Variantenspeicher auf. Entsprechend der Kennung wird aus einem für diese Kennung spezifischen Basisdatensatz und einem ebenfalls für diese Kennung spezifischen Differenzdatensatz ein Arbeitsdatensatz erstellt. Dieser Arbeitsdatensatz wird anschließend in einen Arbeitsspeicher des Steuergerätes übertragen.
Die EP 2 093 639 A2 offenbart ein Verfahren zu Inbetriebnahme einer numerischen Steuerung mit dem eine Systemkonfiguration von an die numerische Steuerung angeschlossenen dezentralen Komponenten überprüft werden kann. Hierzu wird die Systemkonfiguration rekursiv eingelesen und in einer aktuellen Konfigurationsdatei abgespeichert. Der Vergleich mit älteren Konfigurationsdateien erlaubt es, Änderungen an der Systemkonfiguration zu erkennen und entsprechend zu reagieren. Das Verfahren ermöglicht die Änderungserkennung jedoch nur bei Inbetriebnahme der numerischen Steuerung.
Demgemäß besteht die Aufgabe der vorliegenden Erfindung darin, ein Verfahren zum Betreiben eines Feldgerätes vorzuschlagen, mit Hilfe dessen der Betrieb eines Feldgerätes trotz Auftreten einer Fehlfunktion möglichst schnell fortgesetzt werden kann.

Die Aufgabe wird erfindungsgemäß durch ein Verfahren zur Aufrechterhaltung der Funktionsfähigkeit eines Feldgerätes der Automatisierungstechnik nach Anspruch 1 gelöst, wobei das Verfahren unter anderem folgende Schritte vorsieht:
- Überwachung des Feldgerätes auf mindestens eine vorgenommene Parameteränderung, wobei durch die Parameteränderung ein alter Parametersatz in einen neuen Parametersatz geändert wird,
- Speichern aller am Feldgerät vorgenommenen Parameteränderungen in einer Parameteränderungs-Historie,
- Überwachung des Feldgerätes auf eine auftretende Fehlfunktion,
- Durchführen einer Behebungsmaßnahme, wobei zur Behebung der am Feldgerät aufgetretenen Fehlfunktion auf die Parameteränderungs-Historie und ein Parameter-Fehler-Verknüpfungselement zugegriffen wird.

Erfindungsgemäß wird das Verfahren, mittels dessen der Betrieb eines Feldgerätes trotz Auftreten einer Fehlfunktion fortgesetzt werden kann, dadurch gelöst, dass das Feldgerät ständig seinen Zustand auf Fehlfunktionen hin überwacht. Zusätzlich werden alle Änderungen an statischen Parametern im Feldgerät mitprotokolliert. Bei Auftreten einer Fehlfunktion kann das Feldgerät die Parameteränderung mit der aufgetretenen Fehlfunktion verknüpfen und über das Vorortdisplay oder dem Bedientool, dem Nutzer bzw. Bediener eine automatische Behebungsmaßnahme zur Durchführung anbieten.

Erfindungsgemäß wird zur Durchführung der Behebungsmaßnahme mindestens eine automatisch ermittelte Parameteränderung rückgesetzt, wobei zur Ermittlung der mindestens einen automatisch ermittelten Parameteränderung auf das Parameter-Fehler-Verknüpfungselement zugegriffen wird und wobei dem Bediener diese mindestens eine automatisch ermittelte Parameteränderung zur Auswahl angeboten wird und bei Auswahl durch den Bediener das Feldgerät diese mindestens eine automatisch ermittelte Parameteränderung rücksetzt.

Eine vorteilhaften Ausführungsform des erfindungsgemäßen Verfahrens sieht vor, dass alle vorgenommenen Parameteränderungen derartig in der Parameteränderungs-Historie gespeichert werden, dass sich der alte Parametersatz, der vor der jeweils vorgenommenen Parameteränderung bestand, wieder herstellen lässt.

Eine günstige Ausgestaltung des erfindungsgemäßen Verfahrens sieht vor, dass zur Ermittlung der einen automatisch ermittelten Parameteränderung mindestens einer der nachfolgenden Verfahrensschritte durchlaufen wird:
- Zugriff auf das Parameter-Fehler-Verknüpfungselement, wobei das Parameter-Fehler-Verknüpfungselement zumindest eine bekannte Fehlfunktion umfasst, die mit mindestens einer bekannten Parameteränderung verknüpft ist;
- Vergleich der aufgetretenen Fehlfunktion mit allen im Parameter-Fehler-Verknüpfungselement hinterlegten bekannten Fehlfunktionen, wobei im Falle einer Übereinstimmung der aufgetretenen Fehlfunktion mit einer der hinterlegten bekannten Fehlfunktionen, die zu der übereinstimmend hinterlegten bekannten Fehlfunktion verknüpfte bekannte Parameteränderung ausgewählt wird;
- Vergleich der ausgewählten bekannten Parameteränderung mit allen am Feldgerät durchgeführten und gespeicherten Parameteränderung, wobei im Falle einer Übereinstimmung der zugehörigen bekannten Parameteränderung mit einer am Feldgerät durchgeführten und gespeicherten Parameteränderung diese dem Bediener als automatisch ermittelte Parameteränderung zur Rücksetzung angeboten wird. Der Zugriff auf ein Parameter-Fehler-Verknüpfungselement bietet den Vorteil, dass dieses dynamisch, entsprechend den neusten Erkenntnissen, angepasst werden kann. Hierbei kann das Parameter-Fehler-Verknüpfungselement entweder im Feldgerät direkt hinterlegt sein oder, um Speicher einzusparen, auch außerhalb des Feldgerätes, bspw. im Bedienertool evtl. verknüpft zu einem Server. Bei Speicherung außerhalb des Feldgerätes ist es darüber hinaus möglich, das Parameter-Fehler-Verknüpfungselement dynamisch anzupassen und somit mögliche Änderungen nicht nur einem spezifischen sondern gleichzeitig mehreren Feldgerät zur Verfügung zu stellen.

Eine weitere günstige Ausgestaltung des erfindungsgemäßen Verfahrens sieht vor, dass die im Parameter-Fehler-Verknüpfungselement hinterlegten bekannten Fehlfunktionen anhand von statistischen Daten und/oder Erfahrungswerten und/oder bereits durchgeführten Behebungsmaßnahmen mit den bekannten Parameteränderungen verknüpft sind.

Eine weitere günstige Ausführungsform des erfindungsgemäßen Verfahrens sieht vor, dass die durchzuführende Behebungsmaßnahme durch den Bediener über eine Behebungsmaßnahmenliste ausgewählt wird.
Durch das Auswählen der durchzuführenden Behebungsmaßnahme erhält der Bediener bzw. Nutzer die Möglichkeit die Behebungsmaßnahme selbst auszuwählen die durchgeführt werden soll. Somit ist er in der Lage eigene Erfahrungen und Kenntnisse einzubringen.
Weiterhin betrifft das erfindungsgemäße Verfahren ein Feldgerät, welches zum Umsetzen bzw. Durchführung des Verfahrens eingerichtet ist.

Die Erfindung wird anhand der nachfolgenden Zeichnungen näher erläutert. Es zeigt:

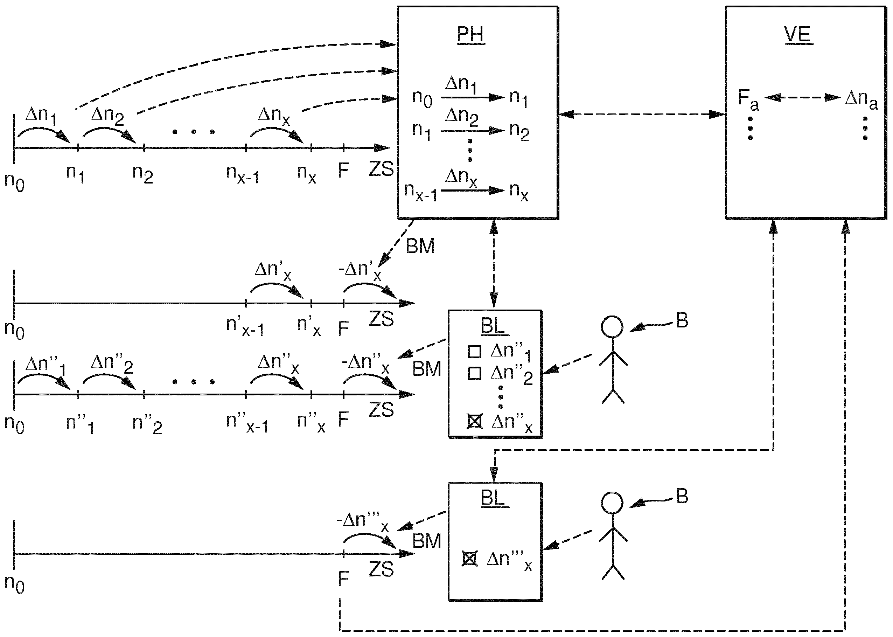

Fig. 1: die wesentlichen Elemente des erfindungsgemäßen Verfahrens, als schematische Darstellung.

Figur 1 zeigt die wesentlichen Elemente des erfindungsgemäßen Verfahrens zur Aufrechterhaltung der Funktionsfähigkeit eines Feldgerätes der Automatisierungstechnik.
Hierzu sind schematisch mögliche Ereignisse an einem Zeitstrahl ZS dargestellt. Der Zeitstrahl ZS dient hierbei zur einfacheren Beschreibung bzw. Darstellung von möglichen Ereignissen, welche an einem Feldgerät auftreten können, insbesondere Parameteränderungen Δnₓ bzw. Konfigurationsänderungen und am Feldgerät auftretende Fehlfunktionen F. Das Feldgerät weist hierbei einen Parametersatz entsprechend dem Auslieferungszustand n₀ auf. Ausgehend von diesem Parametersatz n₀ werden dann mögliche Parameteränderungen Δnₓ am Feldgerät durchgeführt. Hierbei sind speziell die Parameteränderungen Δnₓ gemeint, die nach der Auslieferung des Feldgerätes durchgeführt werden.
Ferner sind in Fig. 1 die am Feldgerät durchgeführten Parameteränderungen durch Δn₁ - Δnₓ dargestellt, während der alte Parametersatz allgemein mit nₓ₋₁ und der neue Parametersatz (der sich aus dem alten Parametersatz und der durchgeführten Parameteränderung Δnₓ ergibt) allgemein mit nₓ dargestellt sind.
Das erfindungsgemäße Verfahren zielt hierbei darauf ab, dass ein Feldgerät, welches durch den Benutzer eine Parameteränderung Δnₓ bzw. Konfigurationsänderung erfahren hat und im weiteren Verlauf seines Produktlebens daraus eine Fehlfunktion F resultiert, in der Lage ist, eine Behebungsmaßnahme BM durchzuführen, um so die Funktionsfähigkeit aufrecht zu erhalten. Hierfür sieht das Verfahren vor, dass das Feldgerät oder das Bedientool auf eine Parameteränderungs-Historie PH und/oder ein Parameter-Fehler-Verknüpfungselement VE zugreift, um mit Hilfe einer dieser Elemente oder der Kombinationen von beiden Elementen eine zur Behebung der aufgetretenen Fehlfunktion F geeignete Behebungsmaßnahme BM zu ermitteln und durchzuführen.

Das Verfahren sieht zu dessen Durchführung vor, dass das Feldgerät alle während des Produktlebens durchgeführten Parameteränderungen Δnₓ in einer Parameteränderungs-Historie PH festhält.
Die durchgeführten Parameteränderungen Δnₓ werden in der Weise in der Parameteränderungs-Historie PH festgehalten, dass sie entsprechend des zeitlichen Auftretens zueinander und zu einer auftretenden Fehlfunktion eindeutig zuordenbar sind.
Eine Parameteränderung Δnₓ überführt hierbei eine Änderung eines alten Parametersatzes nₓ₋₁ auf dem Feldgerät gespeicherten Parametersatz in einen neuen Parametersatz nₓ, welcher ebenfalls wieder auf dem Feldgerät gespeichert wird und somit den alten Parametersatz nₓ₋₁ ersetzt.
Hierbei ist zu berücksichtigen, dass ein Parametersatz nₓ sowohl einen einzelnen Parameter umfassen kann, als auch mehrere einzelne Parameter. Ferner ist es möglich, dass sowohl ein einzelner Parameter als auch mehrere verschiedene Parameter zu einem bestimmten Zeitpunkt geändert werden können.

Am Feldgerät durchgeführte bzw. vorgenommene Parameteränderungen Δnₓ werden, wie bereits beschrieben, in einer Parameteränderungs-Historie PH in der Form festgehalten, dass sich der alte Parametersatz nₓ₋₁ der vor der durchgeführten bzw. vorgenommenen Parameteränderung Δnₓ auf dem Feldgerät gespeichert war, wieder herstellen lässt.
Hierzu sind mehrere Varianten denkbar, bspw. kann der gesamte Parametersatz nₓ₋₁ der vor der durchgeführten Parameteränderung Δnₓ bestand in der Parameteränderungs-Historie PH in der Form festgehalten werden, dass jeder einzelne Parameter mit seinem entsprechenden Wert hinterlegt ist.

Eine alternative Variante kann darin bestehen, dass nicht der gesamte Parametersatz nₓ₋₁ in der Parameteränderungs-Historie PH festgehalten wird, sondern lediglich die Werte, die sich durch die vorgenommen Parameteränderung Δnₓ geändert haben. Diese Variante bietet gegenüber der vorhergehenden Variante, bei der der gesamte Parametersatz nₓ₋₁ gespeichert wird, den Vorteil, dass Speicherplatz eingespart werden kann und die einzelnen Parametersätze nₓ₋₁ sich mittels Rekursion herleiten lassen.
Im Folgenden sind beispielhaft einige Einträge zu Parameteränderungen Δnₓ aufgezeigt, wie sie in die Parameteränderungs-Historie PH gespeichert sein können:

| Parameter | Alter Wert |
|---|---|
| Distanzeinheit | mm |
| 4 mA Wert | 100 |
| 20 mA Wert | 400 |
| 4 mA Wert | 200 |

Zusätzlich zu der Überwachung auf eine Parameteränderung Δnₓ wird das Feldgerät auch auf eine auftretende Fehlfunktion F hin überwacht um beim Auftreten der Fehlfunktion F eine Behebungsmaßnahme BM durchzuführen. Diese Behebungsmaßnahme BM greift zur Behebung der aufgetretenen Fehlfunktion F dabei entweder auf die Parameteränderungs-Historie PH oder ein Parameter-Fehler-Verknüpfungselement VE oder auf beide Elemente zu.

Das Parameter-Fehler-Verknüpfungselement VE stellt hierbei sozusagen eine Lookup-Tabelle dar, in der bekannte Fehlfunktionen aufgelistet werden. Zusätzlich sind in dem Parameter-Verknüpfungselement VE die bekannten Fehlfunktionen Fₐ mit bekannten Parameteränderungen Δnₐ, die diese Fehlfunktion auslösen können, verknüpft. Die im Parameter-Fehler-Verknüpfungselement VE hinterlegten bekannten Fehlfunktionen Fₐ lassen sich anhand von statistischen Daten und/oder Erfahrungswerten, bspw. des Herstellers oder auch des Bedieners B, und/oder bereits durchgeführten Behebungsmaßnahmen BM mit den entsprechenden bekannten Parameteränderungen Δnₐ verknüpfen und hinterlegen. Dabei ist es auch denkbar, dass eine bekannte Fehlfunktion Fₐ mehrmals in der Lookup-Tabelle steht und mit verschiedenen bekannten Parameteränderungen Δnₐ, die alle dieselbe Fehlfunktion Fₐ auslösen können, verknüpft ist.

Im Normalfall ist diese Tabelle bzw. das Parameter-Fehler-Verknüpfungselement VE im Feldgerät fest kodiert, allerdings ist es um Speicherplatz einzusparen auch vorstellbar diese außerhalb des Feldgerätes, bspw. auf Bedienertool-Seite, zu speichern. Ferner kann das Parameter-Fehler-Verknüpfungselement VE als dynamische Tabelle ausgebildet sein, die sich entsprechend den neusten Erkenntnissen, über das Auswirken einer bekannten Parameteränderung Δnₐ auf eine bekannte Fehlfunktion Fₐ, erweitern bzw. anpassen lässt.
Im Folgenden sind beispielhaft einige Einträge, wie sie in dem Parameter-Fehler-Verknüpfungselement VE gespeichert bzw. hinterlegt sein können, gegeben:

| Fehlfunktion | Parameter |
|---|---|
| S441 Stromausgang | 4 mA Wert |
| S441 Stromausgang | 20 mA Wert |
| C207 Simulation ist aktiv | Simulationsmodus |

Wie bereits beschrieben wird zur Behebung der aufgetretenen Fehlfunktion F eine Behebungsmaßnahme BM durchgeführt. Hierbei sieht das Verfahren die folgenden drei alternativen Schritte vor:
i. Zurücksetzen der vor der aufgetretenen Fehlfunktion F zuletzt durchgeführten Parameteränderungen Δn'ₓ. Hierzu wird aus der Parameteränderungs-Historie PH die Parameteränderung Δn'ₓ ermittelt die vor dem Zeitpunkt des Auftretens der Fehlfunktion F durchgeführt wurde. Anhand dieser Parameteränderung Δn'ₓ wird dann der Parametersatz n'ₓ₋₁ wiederhergestellt, der vor Auftreten der Fehlfunktion F bestand.
ii. Zurücksetzen mindestens einer bedienerausgewählten Parameteränderung Δn"ₓ. Dem Bediener B werden alle am Feldgerät durchgeführten und in der Parameteränderungs-Historie PH gespeicherten Parameteränderungen Δnₓ zur Auswahl angeboten und nach Auswahl durch den Bediener B wird die bedienerausgewählte Parameteränderung Δn"ₓ rückgesetzt. Auf diese Weise kann der Bediener B selbst entscheiden, ob eine Parameteränderung Δnₓ für das Auftreten der Fehlfunktion F verantwortlich ist oder nicht.
iii. Zurücksetzen mindestens einer automatisch vom Feldgerät oder dem Bedientool ermittelten Parameteränderung Δn"'ₓ. Hierzu wird auf das Parameter-Fehler-Verknüpfungselement VE in der Art zugegriffen, dass die aufgetretene Fehlfunktion F, mit allen im Parameter-Fehler-Verknüpfungselement VE hinterlegten bereits bekannten Fehlfunktionen Fₐ, verglichen wird. Im Falle einer Übereinstimmung, wird die, zu dieser bekannten Fehlfunktion Fₐ mindestens eine verknüpfte bekannte Parameteränderung Δnₐ ausgewählt. Wie bereits beschrieben, kann das Parameter-Fehler-Verknüpfungselement VE auch eine bekannte Fehlfunktion Fₐ mit mehreren unterschiedlichen bekannten Parameteränderungen Δnₐ verknüpfen. Dementsprechend wird die mindestens eine ausgewählte bekannte Parameteränderung Δnₐ dem Bediener B in einer Behebungsmaßnahmenliste BL als automatisch ermittelte Parameteränderung Δn"'ₓ zur Rücksetzung angeboten. Der Bediener B kann somit zielgerichtet einzelne Parameteränderungen Δnₓ, die einen Einfluss auf die aufgetretene Fehlfunktion F haben, rückgängig machen. Bei dieser Variante kann auf die Parameteränderungs-Historie PH verzichtet werden, was sich insbesondere bei Feldgeräten mit wenig Speicherplatz anbietet. Eine alternative Variante zur Rücksetzung einer automatisch ermittelten Parameteränderung Δn"'ₓ sieht hierfür vor, dass die mittels des Parameter-Fehler-Verknüpfungselements VE ermittelte, mindestens eine bekannte Parameteränderung Δnₐ, zusätzlich noch mit den in der Parameteränderungs-Historie PH gespeicherten Parameteränderungen Δnₓ verglichen wird und nur im Fall einer weiteren Übereinstimmung, mit einem der Einträge der Parameteränderungs-Historie PH, dem Bediener B mittels einer Behebungsmaßnahmenliste BL zur Rücksetzung angeboten wird.

### Bezugszeichenliste

- Δnₓ: Parameteränderung, wobei x = 1,2,... ist und für die jeweilige am Feldgerät durchgeführte Parameteränderung steht.
- Δn'ₓ: Zuletzt durchgeführte Parameteränderung
- Δn"ₓ: Bedienerausgewählte Parameteränderung
- Δn"'ₓ: Automatisch ermittelte Parameteränderung
- nₓ₋₁: alter Parametersatz, der vor der Parameteränderung (Δnₓ) bestand
- nₓ: neuer Parametersatz, der nach der Parameteränderung (Δnₓ) besteht
- n₀: Parametersatz zu Auslieferungszustand
- F: Auftretende Fehlfunktion
- B: Bediener
- Fₐ: Bekannte Fehlfunktion
- Δnₐ: Verknüpfte bekannte Parameteränderung
- VE: Parameter-Fehler-Verknüpfungselement
- BL: Behebungsmaßnahmenliste
- BM: Behebungsmaßnahme
- PH: Parameteränderungs-Historie
- ZS: Zeitstrahl

## Patentansprüche

1. Verfahren zur Aufrechterhaltung der Funktionsfähigkeit eines Feldgerätes der Automatisierungstechnik, wobei das Verfahren folgende Schritte vorsieht:
- Überwachung des Feldgerätes auf mindestens eine vorgenommene Parameteränderung (Δnₓ), wobei durch die Parameteränderung (Δnₓ) ein alter Parametersatz (nₓ₋₁) in einen neuen Parametersatz (nₓ) geändert wird,
- Speichern aller am Feldgerät vorgenommenen Parameteränderungen (Δnₓ) in einer Parameteränderungs-Historie (PH),
- Ständige Überwachung des Feldgerätes auf eine auftretende Fehlfunktion (F),
- Durchführen einer Behebungsmaßnahme (BM), wobei zur Behebung der am Feldgerät aufgetretenen Fehlfunktion (F) auf die Parameteränderungs-Historie (PH) und ein Parameter-Fehler-Verknüpfungselement (VE) zugegriffen wird, wobei zur Durchführung der Behebungsmaßnahme (BM) mindestens eine automatisch ermittelte Parameteränderung (Δn'"ₓ) rückgesetzt wird, wobei zur Ermittlung der mindestens einen automatisch ermittelten Parameteränderung (Δn'"ₓ) auf das Parameter-Fehler-Verknüpfungselement (VE) zugegriffen wird und wobei dem Bediener (B) diese mindestens eine automatisch ermittelte Parameteränderung (Δn'"ₓ) zur Auswahl angeboten wird und bei Auswahl durch den Bediener (B) das Feldgerät diese mindestens eine automatisch ermittelte Parameteränderung (Δn'"ₓ) rücksetzt.

2. Verfahren nach Anspruch 1, wobei alle vorgenommenen Parameteränderungen (Δnₓ) derartig in der Parameteränderungs-Historie (PH) gespeichert werden, dass sich der alte Parametersatz (nₓ₋₁), der vor der jeweils vorgenommenen Parameteränderung (Δnₓ) bestand, wieder herstellen lässt.

3. Verfahren nach einem oder mehreren der vorhergehenden Ansprüche, wobei zur Ermittlung der einen automatisch ermittelten Parameteränderung (Δn"'ₓ) mindestens einer der nachfolgenden Verfahrensschritte durchlaufen wird:
- Zugriff auf das Parameter-Fehler-Verknüpfungselement (VE), wobei das Parameter-Fehler-Verknüpfungselement (VE) zumindest eine bekannte Fehlfunktion (Fₐ) umfasst, die mit mindestens einer bekannten Parameteränderung (Δnₐ) verknüpft ist;
- Vergleich der aufgetretenen Fehlfunktion (F) mit allen im Parameter-Fehler-Verknüpfungselement (VE) hinterlegten bekannten Fehlfunktionen (Fₐ), wobei im Falle einer Übereinstimmung der aufgetretenen Fehlfunktion (F) mit einer der hinterlegten bekannten Fehlfunktionen (Fₐ), die zu der übereinstimmend hinterlegten bekannten Fehlfunktion (Fₐ) verknüpfte bekannte Parameteränderung (Δnₐ) ausgewählt wird;
- Vergleich der ausgewählten bekannten Parameteränderung (Δnₐ) mit allen am Feldgerät durchgeführten und gespeicherten Parameteränderung (Δnₓ), wobei im Falle einer Übereinstimmung der zugehörigen bekannten Parameteränderung (Δnₐ) mit einer am Feldgerät durchgeführten und gespeicherten Parameteränderung (Δnₓ) diese dem Bediener (B) als automatisch ermittelte Parameteränderung (Δn"'ₓ) zur Rücksetzung angeboten wird.

4. Verfahren nach einem oder mehreren der vorhergehenden Ansprüche, wobei die im Parameter-Fehler-Verknüpfungselement (VE) hinterlegten bekannten Fehlfunktionen (Fₐ) anhand von statistischen Daten und/oder Erfahrungswerten und/oder bereits durchgeführten Behebungsmaßnahmen (BM) mit den bekannten Parameteränderungen (Δnₐ) verknüpft sind.

5. Verfahren nach einem oder mehreren der vorhergehenden Ansprüche, wobei die durchzuführende Behebungsmaßnahme (BM) durch den Bediener (B) über eine Behebungsmaßnahmenliste (BL) ausgewählt wird.

6. Feldgerät das zum Durchführen des Verfahrens nach einem der Ansprüche 1 bis 5 eingerichtet ist.

## Claims

1. Method for maintaining the functionality of a field device using in automation engineering, said method involving the following steps:
- Monitoring of the field device for at least one performed parameter change (Δnₓ), wherein an old parameter set (nₓ₋₁) is changed to a new parameter set (nₓ) by the parameter change (Δnₓ),
- Saving of all the parameter changes performed on the field device (Δnₓ in a parameter change history (PH),
- Continuous monitoring of the field device to detect a malfunction (F),
- Performance of a corrective measure (BM), wherein the parameter change history (PH) and a parameter error link element (VE) are accessed to rectify the malfunction (F) occurring at the field device, wherein, in order to perform the corrective measure (BM), at least one parameter change determined automatically (Δn"'ₓ) is reset, wherein the parameter error link element (VE) is accessed to determine the at least one parameter change determined automatically (Δn"'ₓ) and wherein this at least one parameter change determined automatically (Δn"'ₓ) is offered to the operator (B) for selection, and if this is selected by the operator (B), the field device resets this at least one parameter change determined automatically (Δn"'ₓ).

2. Method as claimed in Claim 1, wherein all the parameter changes (Δnₓ made are saved in the parameter change history (PH) in such a way that the old parameter set (nₓ₋₁), which existed before the parameter change (Δnₓ) occurred, can be restored.

3. Method as claimed in one or more of the previous claims, wherein at least one of the following method steps is performed to determine the parameter change determined automatically (Δn"'ₓ) :
- Access to the parameter error link element (VE), wherein said parameter error link element (VE) comprises at least a known malfunction (Fa) which is linked to at least a known parameter change (Δnₐ);
- Comparison of the malfunction that has occurred (F) with all the known malfunctions (Fa) saved in the parameter error link element (VE), wherein if the malfunction that has occurred (F) matches one of the known malfunctions saved (Fa), the known parameter change (Δnₐ) associated with the matching known malfunction saved (Fa) is selected;
- Comparison of the selected known parameter change (Δnₐ) with all the parameter changes (Δnₓ) performed at the field device and saved, wherein in the event that the associated known parameter change (Δnₐ) corresponds to a parameter change (Δnₓ) performed at the field device and saved, this change is proposed to the operator (B) as a parameter change determined automatically (Δn'"ₓ) for resetting.

4. Method as claimed in one or more of the previous claims, wherein the known malfunctions (Fa) saved in the parameter error link element (VE) are associated with known parameter changes (Δnₐ) on the basis of statistical data and/or empirical values and/or corrective measures (BM) already performed.

5. Method as claimed in one or more of the previous claims, wherein the corrective measure (BM) to be performed is selected by the operator (B) via a list of corrective measures (BL).

6. Field device which is configured to perform a method as claimed in one of the Claims 1 to 5.

## Revendications

1. Procédé destiné au maintien de la capacité de fonctionnement d'un appareil de terrain de la technique d'automatisation, le procédé prévoyant les étapes suivantes :
- Surveillance de l'appareil de terrain relativement à au moins un changement de paramètre (Δnₓ effectué, un ancien jeu de paramètres (nₓ₋₁) étant transformé en un nouveau jeu de paramètres (nₓ) par le changement de paramètre (Δnₓ),
- Enregistrement de tous les changements de paramètres effectués sur l'appareil de terrain (Δnₓ dans un historique des changements de paramètres (PH),
- Surveillance continue de l'appareil de terrain pour détecter un dysfonctionnement (F),
- Exécution d'une action corrective (BM), un accès à l'historique des changements de paramètres (PH) et à un élément d'association paramètre-défaut (VE) étant réalisé en vue de remédier au dysfonctionnement (F) qui s'est produit sur l'appareil de terrain, au moins un changement de paramètre déterminé automatiquement (Δn"'ₓ) étant réinitialisé pour exécuter l'action corrective (BM), un accès à l'élément d'association paramètre-défaut (VE) étant réalisé afin de déterminer l'au moins un changement de paramètre déterminé automatiquement (Δn'"ₓ) et cet au moins un changement de paramètre déterminé automatiquement (Δn"'ₓ) étant proposé à l'opérateur (B) pour la sélection et, en cas de sélection par l'opérateur (B), l'appareil de terrain réinitialisant cet au moins un changement de paramètre déterminé automatiquement (Δn'"ₓ).

2. Procédé selon la revendication 1, pour lequel tous les changements de paramètres (Δnₓ) effectués sont enregistrés dans l'historique des changements de paramètres (PH) de telle manière que l'ancien jeu de paramètres (nₓ₋₁), qui était présent avant le changement de paramètre (Δnₓ) respectif, puisse être restauré.

3. Procédé selon l'une ou plusieurs des revendications précédentes, pour lequel au moins l'une des étapes de procédé suivantes est exécutée en vue de la détermination du changement de paramètre déterminé automatiquement (Δn'"ₓ) :
- Accès à l'élément d'association paramètre-défaut (VE), l'élément d'association paramètre-défaut (VE) comprenant au moins un dysfonctionnement connu (Fa) lié à au moins un changement de paramètre connu (Δnₐ) ;
- Comparaison du dysfonctionnement survenu (F) avec tous les dysfonctionnements connus (Fa) stockés dans l'élément d'association paramètre-défaut (VE), le changement de paramètre connu (Δnₐ) lié au dysfonctionnement connu (Fa) stocké de manière concordante étant sélectionné en cas de correspondance entre le dysfonctionnement survenu (F) et l'un des dysfonctionnements connus stockés (Fa) ;
- Comparaison du changement de paramètre connu sélectionné (Δnₐ) avec tous les changements de paramètres (Δnₓ) effectués et enregistrés sur l'appareil de terrain, comparaison pour laquelle, dans le cas où le changement de paramètre connu associé (Δnₐ) correspond à un changement de paramètre (Δnₓ) effectué et enregistré sur l'appareil de terrain, celui-ci est proposé à l'opérateur (B) comme un changement de paramètre déterminé automatiquement (Δn'"ₓ) pour la réinitialisation.

4. Procédé selon l'une ou plusieurs des revendications précédentes, pour lequel les dysfonctionnements connus (Fa) enregistrés dans l'élément d'association paramètre-défaut (VE) sont liés aux changements de paramètres connus (Δnₐ) sur la base de données statistiques et/ou de valeurs empiriques et/ou d'actions correctives (BM) déjà exécutées.

5. Procédé selon l'une ou plusieurs des revendications précédentes, pour lequel l'action corrective (BM) à exécuter est choisie par l'opérateur (B) à partir d'une liste d'actions correctives (BL).

6. Appareil de terrain configuré pour l'exécution du procédé selon l'une des revendications 1 à 5.
